# EUROPEAN PATENT SPECIFICATION

(11) **EP 0 459 509 B1**
(45) Date of publication and mention of the grant of the patent: **14.12.1994**
(21) Application number: 91108950.6
(22) Date of filing: 31.05.1991
(51) Int. Cl.: F16K 1/22

(54) **A butterfly valve**
Klappenventil
Vanne papillon

(30) Priority: 31.05.1990 JP 142736/90
(43) Date of publication of application: 04.12.1991
(73) Proprietor: NBS CO., LTD., Sunto-gun, Shizuoka-ken (JP)
(72) Inventor: Miyairi,Kazuhiro, c/o NBS Co., Ltd., Sunto-gun, Shizuoka-ken (JP)
(74) Representative: Sajda, Wolf E., Dipl.-Phys.

(56) References cited:
- AU-B- 1 472 870
- DESIGN ENGINEERING. October 1988, LONDON GB page 26; 'elliptical butterflyvlave disc prevents seat wear from aggresive media '

## Description

The present invention relates to a butterfly valve in which a shaft connected with a butterfly disk for a rotational or pivotal movement thereof has a double or a single eccentric structure.

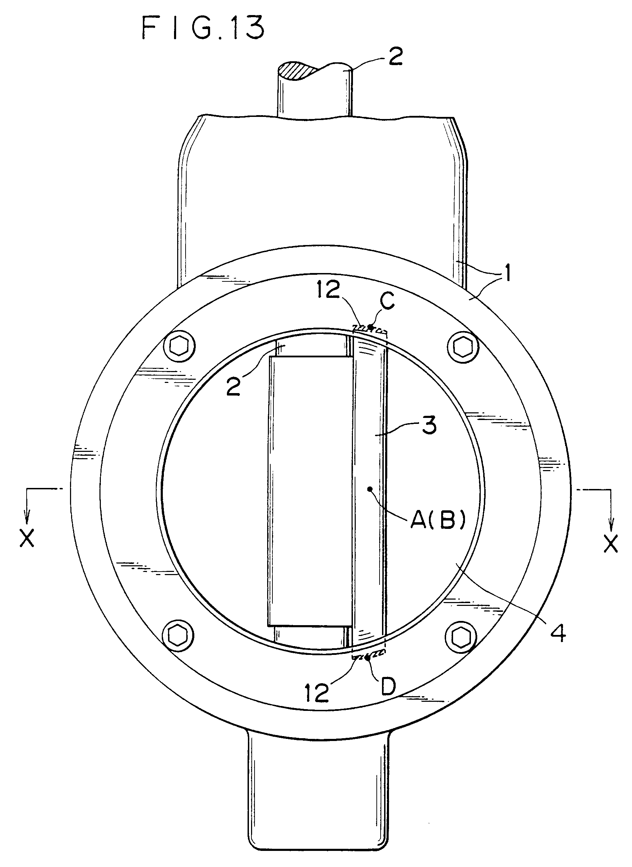

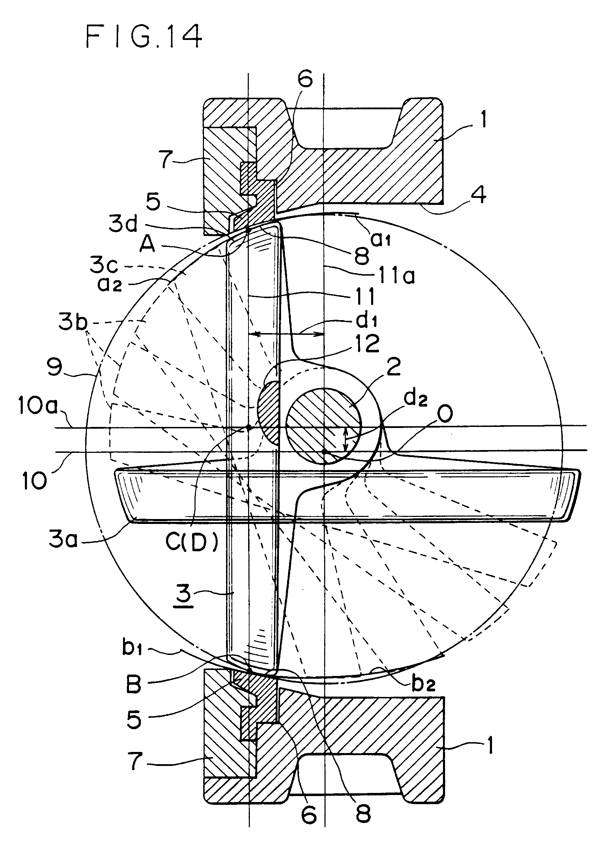

The well-known structure of a butterfly valve according to the first part of claim 1 is shown in Fig. 13 and 14, wherein Fig. 13 is a front view, and Fig. 14 illustrates a sectional view along the line X-X, i. e. in the horizontal direction of Fig. 13.

In general, a butterfly valve, as shown in Fig. 13 and Fig. 14, opens or closes a through hole 4 of a ring-shaped housing 1 mounted in a tube, for example. Therefore, a shaft 2 having a double eccentric structure on the housing 1 is installed perpendicularly to a tube axis 10, securing a butterfly disk 3 to the shaft 2, and capable of flapping the butterfly disk 3 like a butterfly in a rotational or pivotal movement through a rotation of the shaft 2.

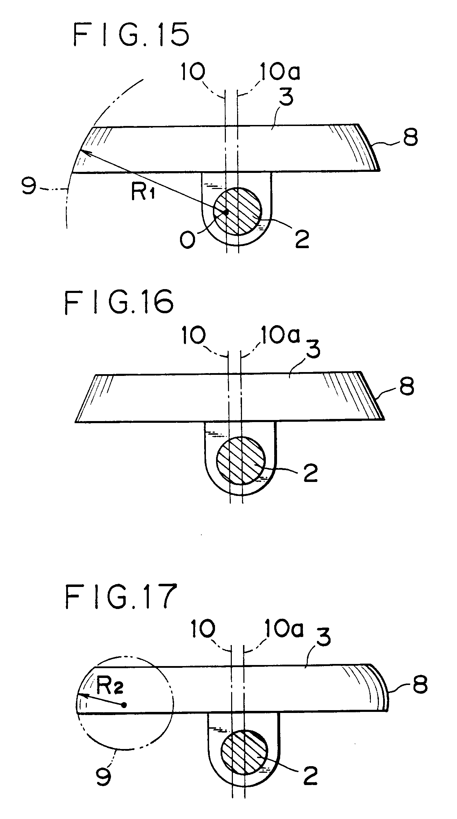

A seat ring 5 is installed on the inner periphery of the through hole 4, which is held in its position by a fitting recess 6 formed in the housing 1 and a seat holding ring 7, as shown in Fig. 14. A contact line or contact surface 8 between the inner periphery of the seat ring 5 and the outer periphery of the butterfly disk 3 is formed to have the shape of a circular arc in cross-section having a slight taper as shown in Fig. 15, forming a circular locus 9 with a radius R1 extending around a point O as a center wherein the circular locus 9 of the circular arc intersects the tube axis or center line 10 of the butterfly disk 3.

The shape of the contact surface 8 of the butterfly disk 3 is not restricted to the example illustrated in Fig. 15. It may also have the shape of a complete circular cone with a straight contact surface 8 in cross-section, as shown in Fig. 16, or the shape of a cone-like element in which a radius R2 of a circular arc in cross-section is small so that a circular locus 9 formed thereby will not intersect the center line 10, as shown in Fig. 17.

Even though the following is a description of the example in Fig. 15, the description can also be applied in a similar way to the examples according to Fig. 16 and Fig. 17.

The so-called double eccentric structure of the shaft 2 is defined as a structure in which the shaft 2 has a first eccentricity according to an eccentricity line 11a extending in parallel with and in a distance d1 from the central contact surface 11 of the butterfly disk 3 (primary eccentricity), and a second eccentricity according to an eccentricity axis 10a extending in parallel with and in a distance d2 from the tube axis or center line 10, passing through the point O (secondary eccentricity). As shown in Fig. 14, center line 10 and eccentricity line 11a are intersecting at the point O, while eccentricity axis 10a and contact surface 11 are intersecting at a point C or D, respectively.

Even though the following is a description of the case in which the central point of the shaft 2 has a double eccentric structure, the description can also be applied to a so-called single eccentric structure having only the first eccentricity according to the distance d1 (primary eccentricity), while omitting the secondary eccentricity by using the special case of d2 = 0.

When the shaft 2 having the above-mentioned double eccentricity rotates or pivots, contact points A and B of the butterfly disk 3 move and rotate along the loci (a1-A-a2) and (b1-B-b2) as shown by a continuous line which is different from the circular locus 9, as shown in Fig. 14. That is, when the closed butterfly disk 3 is being opened, the contact point A moves and rotates while slightly shifting from the position of point A to the point a2, and the contact point B moves and rotates while slightly shifting from the position of point B to the point b2 located inside of the circular locus 9. Therefore, the contact points A and B of the butterfly disk 3 do not cause any unnecessary sliding on the seat ring 5, because they are diagonally separated from the seat ring 5 without sliding thereon.

When the opened butterfly disk 3 is being closed, the contact points A and B are provided at the intersections A and B with the circular locus 9 before the butterfly disk 3 shifts from the inside contact points a2 and b2 toward the outside points a1 and b1 and makes contact at these points A and B where the circular locus 9 and the lines a1-a2 and b1-b2, respectively, cross each other. Therefore, the bearing pressure of the butterfly disk 3 increases and (air-) tightness is improved. However, if any rotation becomes excessive after contacting at the contact points A and B, the torque increases excessively and the seat ring 5 will be damaged. Therefore, normally a stopper must be installed in order to control the rotational or pivotal movement.

A butterfly valve having the above-mentioned double eccentric structure can smoothly open or close so that the (air-) tightness is improved. However, it has the following disadvantages. Namely, when the butterfly disk 3 is opened or closed, the effect of the double eccentric structure is considerable as can be seen around the side portions of the contact points A and B shown in the views of Fig. 13 and 14, respectively.

Since the butterfly disk 3, while contacting with the seat ring 5, rotates around the top and bottom contact points C and D of the butterfly disk 3, the problem arises that abnormal scratches, schematically illustrated by the hatched area 12 in Fig. 13 and Fig. 14, are produced at the top and bottom contact points C and D of the butterfly disk 3, and that the seat ring 5 is locally abraded decreasing the sealing effect thereof.

US-A-3 957 073 deals with such a butterfly valve and discloses that peripheral portions on each side of a vane are shaved adjacent a pin position to accommodate for the thickness of the vane when it moves toward its closed position. However, the description is completely silent how the cut portion of the disk comes in contact with the seat ring so that the question is left how any long-time sealing effect can be obtained thereby.

The object of the present invention is to provide a butterfly valve capable of obtaining a stable sealing effect for a long time and avoiding or at least minimizing any scratches of the butterfly disk and abrasion of the seat ring.

This object is solved by the invention in a satisfying manner as explained in detail below in the following description.

The butterfly valve according to the invention, in which a butterfly disk is opened or closed by pivotally rotating it by means of a shaft connected with the butterfly disk and bringing the outer periphery contact surface of a butterfly disk in contact with or out of contact from a seat ring provided at a through hole of a housing, is characterised in that at least the sealing areas in the vicinity of the shaft are formed smaller than any other sealing areas at the outer periphery contact portion or surface of the butterfly disk.

Therefore, when the butterfly valve is closed by the butterfly disk, that portion of the butterfly disk close to the shaft, which will at first get in contact with the seat ring, almost simultaneously starts contacting the seat ring throughout the whole periphery because the area of this portion is formed smaller than any other sealing areas. Thus, any scratches around the shaft and abrasion of the seat ring are practically avoided or at least decreased, and the desired sealing effect can be maintained for a long time.

The invention will be explained in more detail below with reference to the accompanying drawings from which further features and advantages will be readily apparent.

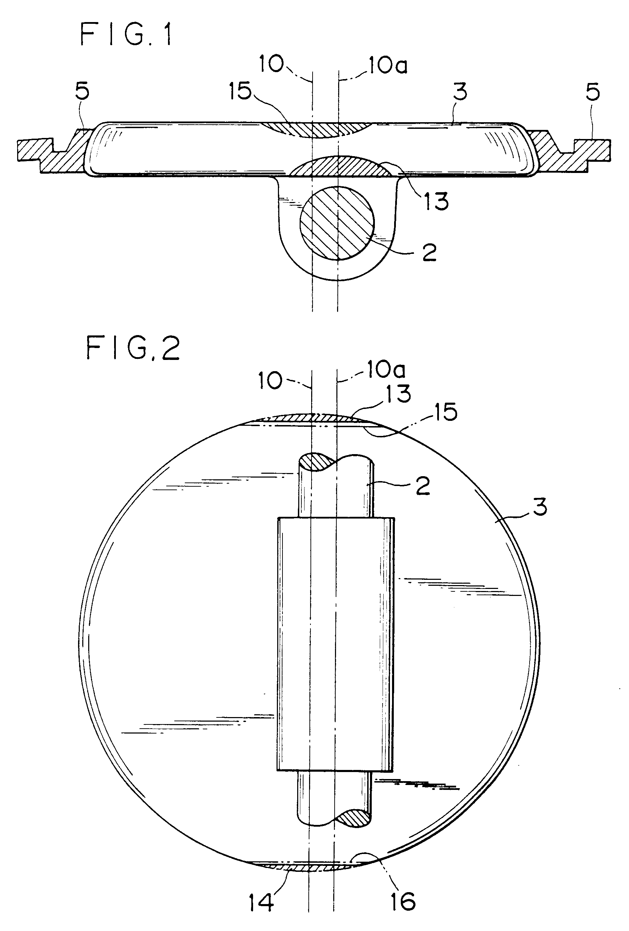

- Fig. 1: is a top view showing a first embodiment of the butterfly valve according to the present invention;
- Fig. 2: is a front view of the butterfly valve of Fig. 1;

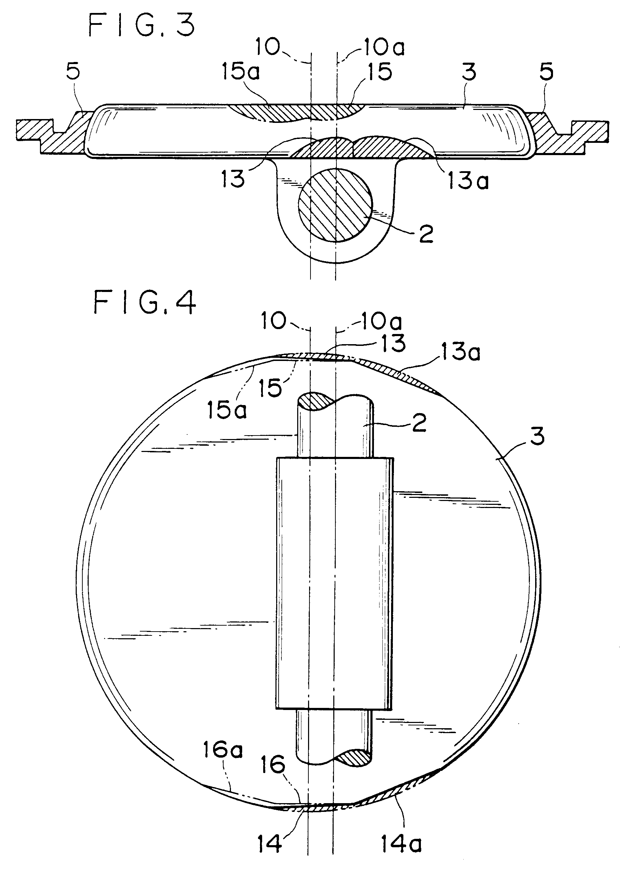

- Fig. 3: is a top view showing a second embodiment of the butterfly valve according to the present invention;
- Fig. 4: is a front view of the butterfly valve according to Fig. 3;

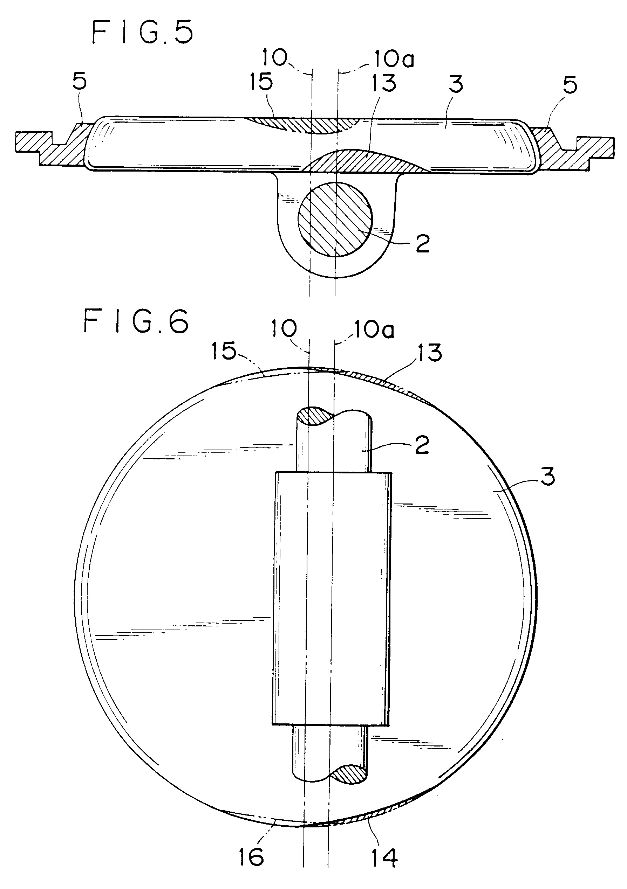

- Fig. 5: is a top view showing a third embodiment of the butterfly valve according to the present invention;
- Fig. 6: is a front view of the butterfly according to Fig. 5;

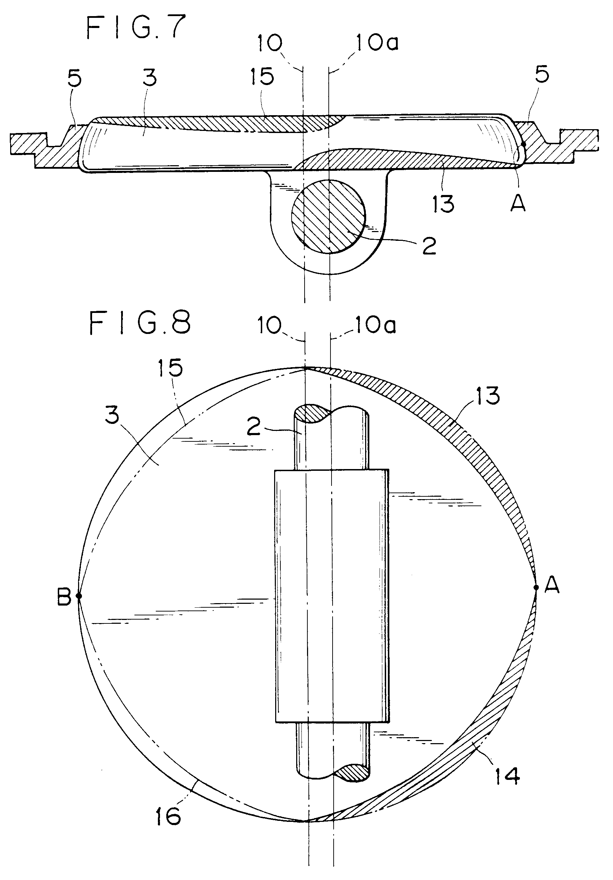

- Fig. 7: is a top view showing a fourth embodiment of the butterfly valve according to the present invention;
- Fig. 8: is a front view of the butterfly valve according to Fig. 7;

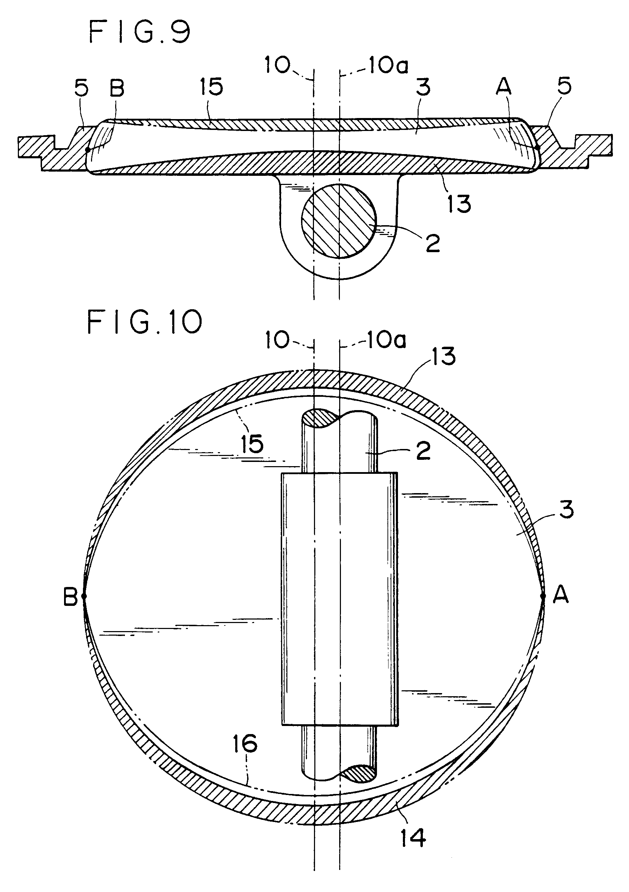

- Fig. 9: is a top view showing a fifth embodiment of the butterfly valve according to the present invention;
- Fig. 10: is a front view of the butterfly valve according to Fig. 9;

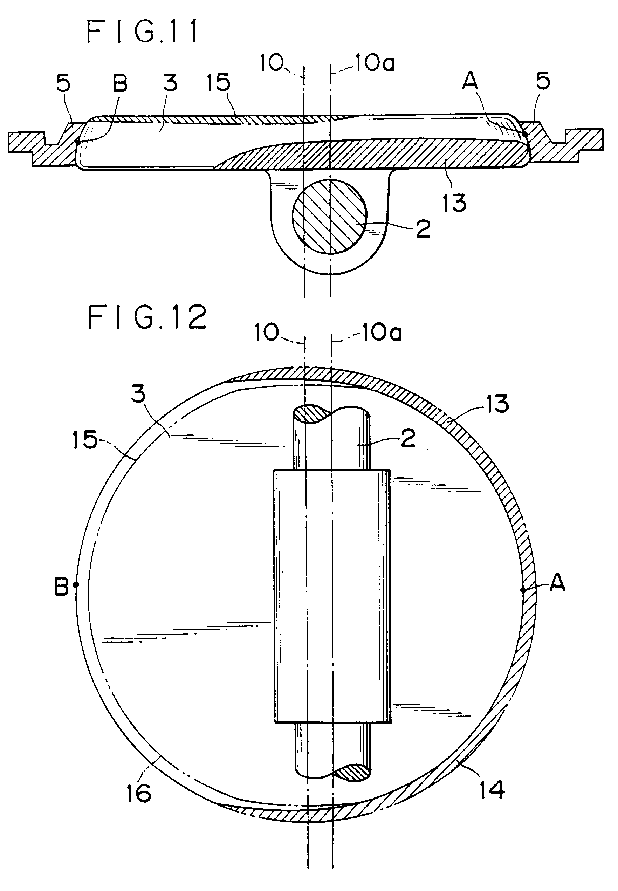

- Fig. 11: is a top view showing a sixth embodiment of the butterfly valve according to the present invention;
- Fig. 12: is a front view of the butterfly valve according to Fig. 11;
- Fig. 13: is a front view showing the general structure of a butterfly valve;
- Fig. 14: is a sectional view of the butterfly valve along the line X-X in Fig. 13 in an imaginary horizontal plane; and
- Figs. 15 16, 17: are explantory views of examples having different types of butterfly disks.

Various embodiments of the present invention will be described below with reference to Fig. 1 through 12, wherein the same reference symbols as above are used for the same or corresponding components.

At first, the mechanism and operation are described with reference to Fig. 14, where the outer periphery contact surface 8 of the butterfly disk 3 comes in or out of contact with the seat ring 5 when the butterfly disk 3 is opened or closed.

In this case, it is assumed that the shaft 2 is provided with a double eccentric structure as shown in Fig. 14, and the respective phases will be explained below:
(1) In a state 3a, illustrated with a continuous line, when the butterfly disk 3 is fully open and extends perpendicularly to the cross-section of the through hole 4 shown in Fig. 13, the seat ring 5 does not contact at all the butterfly disk 3.
(2) Further, in a state 3b, illustrated with a dotted line, when the butterfly disk 3 has been rotated by about 30° to 50°, the top contact point C and the bottom contact point D of the butterfly disk 3 start contacting the seat ring 5.
(3) Further, in the states 3b to 3c, illustrated with dotted lines, when the butterfly disk 3 has been rotated by an angle of about 30° to 75°, the area of the contact surface 8 which really makes contact between the butterfly disk 3 and the seat ring 5 slowly moves from the top contact point C and the bottom contact point D to the side contact points A and B.
(4) Finally, in the state 3d, illustrated with a continuous line, when the butterfly disk 3 has been rotated by 90°, the valve is completely closed.

From the situation described above, it becomes clear that it is preferable that areas or portions other than the horizontal portions of the butterfly disk 3 do not contact the seat ring 5 until the horizontal portions at the outer periphery contact surface 8 of the butterfly disk 3 start contacting the seat ring 5. Namely, these "horizontal portions" are the portions in the area of the side contact points A and B in an imaginary horizontal plane with reference to the situation shown in Fig. 13 and Fig. 14, while the top contact point C and the bottom contact point D are above and below, respectively, of the imaginary horizontal plane as shown in Fig. 13.

Therefore, according to the present invention, the sealing area at the outer periphery of the butterfly disk 3 is formed with recesses or notches 13 and 14 at the top and bottom of the outer periphery of the contact surface 8 of the butterfly disk 3 as shown by the hatched areas in Fig. 1 and Fig. 2. The notches 13 and 14 according to Fig. 1 and 2 are formed approximately in the shape of a circular arc in cross-section so that the sealing area will become smaller around the area of the shaft 2. This means that only the highest portion of the outer periphery of the contact surface 8 of the butterfly disk 3 at the side of the shaft 2, passing through the secondary eccentric axis 10a, will be scraped at all.

It is important to note that the notches 13 and 14 are not restricted to the shapes shown in Fig. 1 and Fig. 2. The notches may also be provided with the shapes shown in detail in Fig. 3 through 12. These embodiments are described below.

Figs. 3 and 4 show an embodiment where additional notches 13a and 14a are provided at one side in addition to and continuous with the notches 13 and 14 and formed by double surface cutting. Since the butterfly disk 3 rotates or pivots just by about 90° or less, it is only necessary to form these additional notches 13a and 14a at one end, namely at the right side in the illustrated embodiment.

Figs. 5 and 6 show another embodiment of the invention where the notches 13 and 14 are extended in lengthwise direction at one end, namely the right side in the illustrated embodiment, wherein this shape is obtained by single-surface cutting.

Figs. 7 and 8 show still another embodiment of the invention where the notches 13 and 14 are extended a relatively far distance from the center line 10, namely up to a position corresponding to the side contact point A at one end at the right side in the illustrated embodiment, so that they will gradually become thin as shown in Fig. 7.

Figs. 9 and 10 show a still further embodiment of the invention where the notches 13 and 14 are also extended a relatively far distance from the center line 10, namely up to positions corresponding to the contact points A and B at the both ends so that they will gradially become thin as shown in Fig. 9.

Figs. 11 and 12 show still another embodiment of the invention where the notches 13 and 14 are provided at one end extending along about half of the periphery in the illustrated embodiment of Fig. 12 and formed with approximately the same depth as shown in Fig. 11.

In the embodiments according to Fig. 1 through 12, the notches 13, 13a, 14 and 14a are provided in a high portion of the periphery at the side of the shaft 2 of the butterfly disk 3. However, it is also possible to provide and form the notches in a low portion of the periphery of the butterfly disk 3 at the opposite side. That is, in the embodiments according to Fig. 1 through 12, the notches 15, 15a, 16 and 16a shown by corresponding chain lines can be formed in the periphey of the butterfly disk 3 at the opposite side, namely opposite to the shaft 2 of the butterfly disk 3.

## Claims

1. A butterfly valve, comprising a butterfly disk (3) mounted in a through hole (4) of a housing (1) and rotatable by means of a shaft (2) so that the butterfly disk (3) is movable into and out of engagement with a seat ring (5) of the butterfly valve wich is opened or closed by rotating the butterfly disk (3) with the shaft (2) connected therewith so that the outer periphery contact surface (8) of the butterfly disk (3) makes contact with or is separated from the seat ring (5) at the periphery of the through hole (4) in the housing (1), characterised in that at least the sealing area of the butterfly disk (3) around or in the vicinity of the shaft (2) is formed smaller (13, 13a, 14, 14a, 15, 15a, 16, 16a) than other sealing areas at the outer periphery contact surface (8) of the butterfly disk (3).

2. The butterfly valve according to claim 1, wherein the smaller portions of the butterfly disk (3) are formed by notches (13, 13a, 14, 14a, 15, 15a, 16, 16a) which are formed in a part of the outer periphery contact surface (8) of the butterfly disk (3) in order to minimize the sealing area around the shaft (2).

## Patentansprüche

1. Klappenventil mit einer Klappenscheibe (3), die in einem Durchgangsloch (4) eines Gehäuses (1) angebracht ist und die mittels einer Achse (2) derart schwenkbar ist, daß sich die Klappenscheibe (3) in und außer Eingriff mit einem Sitzring (5) des Klappenventils bewegen läßt, das durch Verschwenken der Klappenscheibe (3) mit der damit verbundenen Achse (2) geöffnet oder geschlossen wird, so daß die Außenumfangs-Kontaktfläche (8) der Klappenscheibe (3) am Umfang des Durchgangslochs (4) in dem Gehäuse (1) mit dem Sitzring (5) in Berührung tritt oder von diesem getrennt wird,
dadurch gekennzeichnet,
daß wenigstens der Dichtungsflächenbereich der Klappenscheibe (3) um die Achse (2) herum oder in der Nähe der Achse (2) kleiner (13, 13a, 14, 14a, 15, 15a, 16, 16a) ausgebildet ist als andere Dichtungsflächenbereiche an der Außenumfangs-Kontaktfläche (8) der Klappenscheibe (3).

2. Klappenventil nach Anspruch 1,
dadurch gekennzeichnet,
daß die kleineren Bereiche der Klappenscheibe (3) durch Aussparungen (13, 13a, 14, 14a, 15, 15a, 16, 16a) gebildet sind, die in einem Teil der AußenumfangsKontaktfläche (8) der Klappenscheibe (3) ausgebildet sind, um den Dichtungsflächenbereich um die Achse (2) herum auf ein Minimum zu reduzieren.

## Revendications

1. Valve papillon, comprenant un disque de papillon (3) monté dans un trou traversant (4) d'un boîtier (1) et capable de tourner au moyen d'un arbre (2) de sorte que le disque de papillon (3) peut être déplacé en engagement avec un siège annulaire (5) de la valve de papillon, et hors d'engagement avec ledit siège, celui étant ouvert ou fermé en faisant tourner le disque de papillon (3) avec l'arbre (2) qui lui est raccordé, de sorte que la surface de contact (8) à la périphérie extérieure du disque de papillon (3) vient en contact avec le siège annulaire (5) ou en est séparé à la périphérie du trou traversant (4) dans le boitier (1), caractérisée en ce que la zone d'étanchéité au moins du disque de papillon (3) autour de l'arbre (2) ou au voisinage de celui-ci est formée plus petite (13, 13a, 14, 14a, 15, 15a, 16, 16a) que les autres zones d'étanchéité à la surface de contact (8) en périphérie extérieure du disque de papillon (3).

2. Valve papillon selon la revendication 1, dans laquelle les parties plus petites du disque papillon (3) sont formées par des entailles (13, 13a, 14, 14a, 15, 15a, 16, 16a) qui sont formées dans une partie de la surface de contact (8) à la périphérie extérieure du disque de papillon (3) afin de minimiser la zone d'étanchéité autour de l'arbre (2).
